# DEMANDE DE BREVET EUROPEEN

(11) **EP 0 892 567 A1**
(43) Date de publication de la demande: **20.01.1999**
(21) Numéro de dépôt: 98401703.8
(22) Date de dépôt: 06.07.1998
(51) Int. Cl.: H04Q 7/20

(54) **Dispositif pour relier un commutateur téléphonique à un réseau téléphonique fixe via une pluralité de terminaux radiotéléphoniques fixes**

(30) Priorité: 15.07.1997 FR 9708946
(71) Demandeur: ALCATEL ALSTHOM COMPAGNIE GENERALE D'ELECTRICITE, 75008 Paris (FR)
(72) Inventeur: Aucoeur, Jean-Pierre, 95240 Cormeilles (FR)
(74) Mandataire: Sciaux, Edmond

(57) **Abrégé**

Ce dispositif permet de relier un commutateur téléphonique (SW) à un réseau téléphonique fixe (PSTN) via un réseau radiotéléphonique (PLMN) de type GSM ou dérivé ; une pluralité de terminaux d'usager fixes (UT1,..., UT100) étant reliés à ce commutateur téléphonique. Ce dispositif comporte une pluralité de terminaux radiotéléphoniques (RT1,...,RT3) fixes, et des moyens de coordination (CD) pour gérer dynamiquement l'affectation des terminaux radiotéléphoniques (RT1,...,RT3) aux communications téléphoniques établies entre le réseau téléphonique fixe (PSTN) et les terminaux d'usager (UT1,..., UT100). Ils activent à chaque instant un seul des terminaux radiotéléphoniques fixes (RT1,...,RT3), choisi parmi ceux qui sont disponibles à l'instant considéré, pour le mettre à l'écoute des messages de recherche d'un terminal.

## Description

L'invention concerne un dispositif pour relier un commutateur téléphonique à un réseau téléphonique fixe via un réseau radiotéléphonique, plusieurs terminaux radiotéléphoniques fixes permettant de remplacer une liaison par câble. Chaque terminal radiotéléphonique fixe remplit des fonctions analogues à celles d'un terminal radiotéléphonique portable classique, mais il relie au réseau téléphonique fixe un commutateur au lieu de relier un seul usager. Le dispositif selon l'invention peut être utilisé pour relier à un réseau téléphonique publique un commutateur desservant un hôtel, ou un village, situé dans une région isolée où la pose d'un câble ou d'une autre infrastructure terrestre serait trop coûteuse. Ce commutateur dessert un groupe de terminaux d'usager fixes en assurant le routage des appels arrivant du réseau public. Chaque terminal radiotéléphonique fixe est utilisé successivement pour différents terminaux d'usager, puisque ceux-ci ne sont pas utilisés en permanence. Plusieurs terminaux radiotéléphoniques peuvent se partager une même bande de fréquence grâce à une répartition dans le temps, ou par code.

L'invention concerne plus particulièrement les réseaux radiotéléphoniques de type GSM, et ceux de types dérivés du type GSM qui comporteront un satellite stationnaire ou des satellites à défilement. Les réseau de type GSM présentent les caractéristiques suivantes :
- Une zone géographique découpée en cellules, pour permettre la réutilisation des fréquences porteuses.
- Une passerelle gère les ressources de chaque cellule, en ce qui concerne les fréquences porteuses et la pluralité de canaux portés par chaque fréquence porteuse.
- Au moins un centre de commutation du service radio mobile gère les appels, les connexions avec le réseau téléphonique fixe, et des bases de données contenant : le numéro d'annuaire, le numéro international d'abonné mobile, et la localisation de chaque abonné mobile.

Un terminal radiotéléphonique de type GSM ou dérivé ne peut être que dans un seul des états suivants :
- à l'écoute des messages de recherche d'un terminal ;
- ou en communication téléphonique avec le réseau radiotéléphonique ;
- ou disponible, un terminal étant considéré comme disponible même s'il est en procédure de localisation, ou d'authentification .

Les réseaux GSM classiques ou dérivés ne sont pas conçus pour que plusieurs abonnés utilisent un même terminal d'usager. L'usager personnalise le terminal qu'il utilise en y insérant une carte d'identification appelée SIM (Subscriber identification module) contenant une identité internationale d'abonné mobile appelée IMSI (international mobile subscriber identity), qui détermine le compte sur lequel seront facturés les appels. Après une phase d'initialisation, ce terminal est désigné dans les messages radio par une identité temporaire d'abonné mobile, appelée TMSI (Temporary mobile subscriber identity), qui permet de protéger l'anonymat de l'usager. D'autre part, une procédure d'authentification utilise une clé secrète contenue dans la carte d'identification SIM, pour empêcher un fraudeur d'utiliser l'identité IMSI ou l'identité TMSI d'un autre usager, lorsqu'un appel est émis et lorsqu'un appel est reçu.

L'utilisation de plusieurs terminaux radiotéléphoniques fixes pour relier un même commutateur à un réseau GSM pose un problème de coordination de ces terminaux, puisqu'il faut éviter que plusieurs terminaux disponibles répondent en même temps à un message de recherche concernant un même terminal d'usager.

Le document GB 2 293 524 décrit un procédé permettant de résoudre ces problèmes, mais il ne décrit pas de moyens pour coordonner et optimiser l'utilisation d'une pluralité de terminaux radiotéléphoniques fixes utilisés dans ces conditions.

Le but de l'invention est de proposer un dispositif qui résolve ce problème, tout en permettant d'utiliser, sans modification, un réseau radiotéléphonique de type GSM classique ou dérivé.

L'objet de l'invention est un dispositif pour relier un commutateur téléphonique à un réseau téléphonique fixe via une pluralité de terminaux radiotéléphoniques fixes d'un réseau radiotéléphonique ; une pluralité de terminaux d'usager étant reliés à ce commutateur téléphonique ; ce dispositif comportant une pluralité de terminaux radiotéléphoniques fixes comportant chacun des moyens pour communiquer avec ce réseau radiotéléphonique, ces moyens comportant un processeur ; chacun des terminaux radiotéléphoniques fixes ne pouvant être que dans un seul des états suivants :
- à l'écoute des messages de recherche d'un terminal ;
- en communication téléphonique avec le réseau radiotéléphonique ;
- ou disponible, un terminal étant considéré comme disponible même s'il est en procédure de localisation, ou d'authentification ;
caractérisé en ce qu'il comporte en outre des moyens de coordination reliés à chacun des processeurs des terminaux radiotéléphoniques fixes, pour gérer dynamiquement l'affectation de ces terminaux aux communications téléphoniques établies entre le réseau téléphonique fixe et les terminaux d'usager ;
en ce que chaque terminal radiotéléphonique fixe comporte des moyens pour indiquer son état aux moyens de coordination ;
et en ce que les moyens de coordination comportent des moyens pour activer à chaque instant un seul des terminaux radiotéléphoniques fixes choisi parmi ceux qui sont disponibles à l'instant considéré, pour le mettre à l'écoute de messages de recherche d'un terminal.

Le dispositif ainsi caractérisé ne nécessite pas de modifier le réseau GSM utilisé, parce qu'il surveille l'état de chacun des terminaux radiotéléphoniques fixes, et active l'un d'eux pour le mettre à l'écoute des messages de recherche, sans faire intervenir le réseau GSM.

Selon un mode de réalisation préférentiel, les terminaux radiotéléphoniques fixes comportent des moyens pour transmettre aux moyens de coordination une identité reçue dans un message de recherche diffusé par le réseau radiotéléphonique ;
et ce que les moyens de coordination contiennent et mettent à jour une table d'identités internationales d'abonné mobile et d'identités temporaires d'abonné mobile, correspondant aux terminaux d'usager reliés au commutateur pour :
- déterminer si une identité reçue correspond à l'un de ces terminaux d'usager, et répondre au terminal radiotéléphonique qui l'a reçu ;
- et, le cas échéant, commander à ce terminal d'établir une communication avec le réseau radiotéléphonique.

Le dispositif ainsi caractérisé permet une gestion simple des identités IMSI et TMSI. La centralisation du traitement permet d'augmenter ou de réduire le nombre de terminaux radiotéléphoniques sans modifier les moyens nécessaire pour ce traitement.

Selon un mode de réalisation préférentiel, qu'un seul terminal radiotéléphonique comporte des moyens pour authentifier un terminal radiotéléphonique en utilisant une même clé pour tous les appels reçus ou émis via ce terminal radiotéléphonique fixe, et quel que soit ce terminal ;
et en ce que les autres terminaux radiotéléphoniques fixes comportent chacun des moyens pour demander aux moyens de coordination de lui indiquer quel terminal radiotéléphonique fixe comporte des moyens pour authentifier ; et pour demander ensuite au terminal ainsi désigné d'effectuer la procédure d'authentification.

Le dispositif ainsi caractérisé permet une gestion simple des clés d'authentification de terminaux d'usager, grâce au fait qu'une seule clé est commune à tous les terminaux radiotéléphoniques fixes. Il suffit que le réseau radiotéléphonique attribue une même clé à tous les terminaux d'usager raccordés au commutateur considéré.

Selon un mode de réalisation préférentiel, chaque terminal radiotéléphonique fixe comporte en outre des moyens pour effectuer une procédure de localisation, pour toutes les identités internationales ou temporaires d'abonné mobile, IMSI ou TMSI, qui sont contenues dans la table ;
et en ce que les moyens de coordination comportent des moyens pour choisir l'un des terminaux radiotéléphoniques disponibles, et l'activer pour effectuer la procédure de localisation pour toutes les identités internationales d'abonné mobile qui sont contenues dans la table.

Le dispositif ainsi caractérisé permet de réaliser la procédure de localisation de tous les terminaux d'usager raccordés au commutateur considéré, en n'occupant qu'un seul terminal radiotéléphonique, ce qui permet de réduire la durée consacrée à des tâches autres que les communications.

L'invention sera mieux comprise et d'autres caractéristiques apparaîtront à l'aide de la description ci-dessous et des figures l'accompagnant :
- La figure 1 représente le schéma synoptique d'un exemple de réalisation du dispositif selon l'invention, dans un exemple d'application ;
- La figure 2 représente un diagramme temporel illustrant le fonctionnement du dispositif selon l'invention, lors de l'établissement d'une communication dans cet exemple d'application.

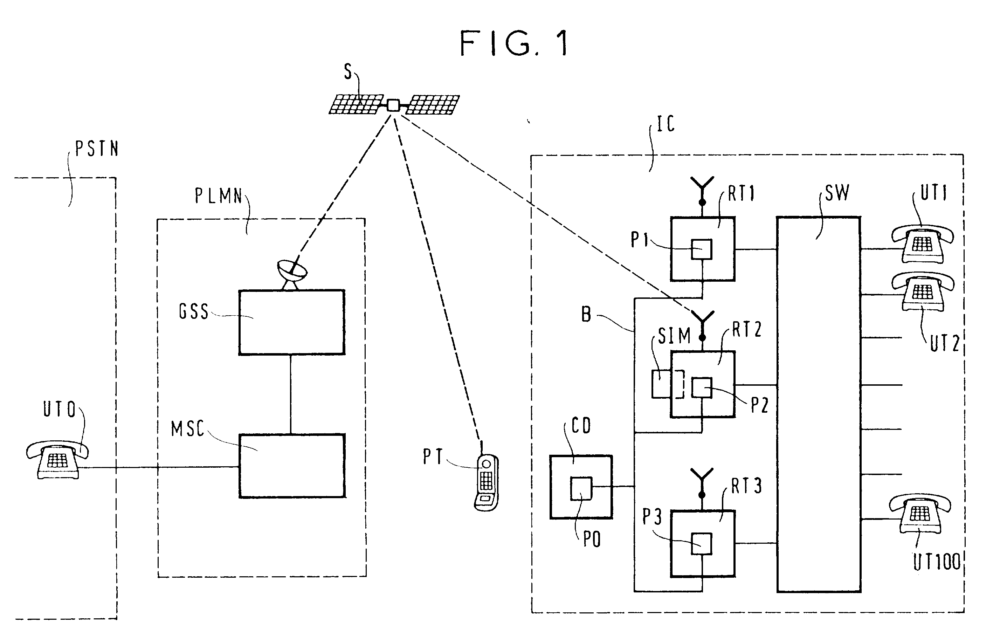

La figure 1 représente le schéma synoptique d'un exemple d'application du dispositif selon l'invention, pour fournir les services d'un réseau téléphonique commuté national, PSTN, à une communauté lC située dans une région isolée. Cette communauté isolée lC est desservie par un commutateur SW auquel sont reliés cent terminaux téléphoniques classiques UT1,...,UT100, par exemple. Le commutateur SW est relié à un réseau téléphonique commuté national, PSTN (Public switched telephone network), par l'intermédiaire d'un réseau de radiotéléphonie PLMN (Public land mobile network), de type dérivé du type GSM.

Le réseau PLMN comporte un satellite géostationnaire ou plusieurs satellites à défilement. et dessert principalement des terminaux radiotéléphoniques mobiles PT. Un centre de commutation pour le service radio mobile, MSC, est relié à un satellite S par une passerelle G qui maintient une liaison radio avec le satellite S. Le commutateur SW communique avec le satellite S au moyens de trois terminaux radiotéléphoniques RT1, RT2, RT3. Chaque terminal radiotéléphonique fixe RT1, RT2, RT3 est relié par un câble téléphonique classique au commutateur SW ; et par un bus B à un dispositif de coordination CD muni d'un processeur P0.

Le terminal radiotéléphonique fixe RT2 est le seul à comporter un dispositif de lecture de carte d'identification. Une carte SIM classique est insérée dans ce lecteur.

Chaque terminal radiotéléphonique fixe RT1, RT2, RT3 possède respectivement un processeur P1, P2, P3 muni d'un programme qui détermine le fonctionnement de ce terminal. Le fonctionnement est identique à celui d'un terminal radiotéléphonique classique, de type GSM ou dérivé, mis à part la fonction d'identification, la fonction d'authentification, et la fonction de sélection directe à l'arrivée, propres au dispositif selon l'invention. En particulier, ils peuvent être commandés par le dispositif de coordination CD, via le bus B. Un mode de réalisation préférentiel consiste à utiliser un terminal radiotéléphonique classique, de type GSM ou dérivé, en ne modifiant que le programme du processeur, afin de réaliser les fonctions propres au dispositif selon l'invention.

Chacun des terminaux radiotéléphoniques RTI, RT2, RT3 ne peut être que dans l'un des états suivants :
- à l'écoute des messages de recherche d'un terminal ;
- ou en communication téléphonique avec le réseau PLMN ;
- ou disponible, un terminal étant considéré comme disponible même s'il est en procédure de localisation, ou d'authentification .

Un terminal qui est à l'état disponible change d'état lorsque le dispositif de coordination CD commande ce terminal pour le mettre à l'écoute des messages de recherche, ou pour lui faire établir une communication. Les procédures d'authentification sont réalisée par le terminal RT2 parallèlement à ses autres tâches qui sont identiques à celles des autres terminaux. Autrement dit, le terminal RT2 n'est pas considéré comme occupé lorsqu'il est seulement en train d'exécuter la procédure d'authentification.

Dans cet exemple, tous les terminaux d'usager UT1,..., UT100 sont identifiés par le réseau PLMN par cent identités internationales d'abonné mobile, IMSI, identiques à deux chiffres près. Lorsque la carte SIM a été insérée dans le terminal RT2 son processeur P2 a lu l'identité IMSI qu'elle contient et l'a transmise au dispositif de coordination CD. Lorsqu'un terminal RT1, RT2, ou RT3, qui est à l'écoute des messages de recherche, reçoit un tel message, il transmet au dispositif de coordination CD l'identité IMSI ou TMSI reçue dans ce message. Le dispositif de coordination CD contient et met à jour une table faisant correspondre les cent identités internationales d'abonné mobile IMSI et les cent identités temporaires d'abonné mobile TMSI, correspondant aux terminaux d'usager UT1,..., UT100 reliés au commutateur SW, lorsque de telles identités temporaires ont été affectées. La table est mise à jour lorsque le réseau PLMN indique à l'un des terminal RT1, RT2, ou RT3, qu'une première ou une nouvelle identité temporaire TMSI est attribuée à l'un des terminaux d'usager UT1,..., UT100.

Le processeur P0 du dispositif de coordination CD détermine si une identité IMSI ou TMSI reçue correspond à l'un de ces terminaux d'usager UT1,...,UT100, et il répond au terminal qui l'a reçue, soit en lui disant de reprendre l'écoute des messages de recherche, si l'identité reçue n'est pas une des identités contenues dans la table ; soit en lui disant d'établir une communication, si l'identité reçue est une des identités contenues dans la table. Dans cet exemple, le dispositif de coordination CD doit identifier un ensemble de cent identités IMSI et un ensemble de cent identités TMSI correspondant respectivement aux terminaux UT1,..., UT100.

Pour simplifier le dispositif, une seule carte SIM est utilisée, et les cent identités IMSI sont identiques à deux chiffres près. Pour reconnaître une identité IMSI, le logiciel du dispositif de coordination CD masque deux chiffres prédéterminés parmi les chiffres constituant l'identité IMSI lue sur la carte SIM, et il masque deux chiffres prédéterminés parmi les chiffres constituant l'identité IMSI contenue dans un message reçu, puis il compare. Si tous les chiffres non masqués sont reconnus cela signifie que le terminal recherché est l'un des cent terminaux UT1,..., UT100.

Les deux chiffres masqués sont utiles, par contre, au réseau PLMN. Ils permettent de distinguer les cent terminaux d'usager fixes UT1,..., UT100, notamment pour pouvoir facturer leurs appels indépendamment.

Dans d'autres exemples de réalisation, où plusieurs terminaux radio fixes possèdent chacun une carte d'identité SIM, toutes les cartes SIM doivent contenir la même identité IMSI, et la même clé de décodage, de façon à pouvoir utiliser n'importe que terminal radio fixe pour établir des communications vers n'importe quel terminal UT1,..., UT100. L'avantage de cette pluralité de cartes SIM est de fournir une redondance permettant une meilleure tolérance aux pannes.

Lorsqu'un message reçu contient une identité temporaire TMSI, le processeur P0 compare celle-ci avec les identité temporaires TMSI qu'il garde en mémoire.

Lorsqu'un terminal radiotéléphonique RT1, RT2, ou RT3 établit une communication pour un appel arrivant du réseau PLMN ou partant d'un terminal UT1,..., UT100, il est nécessaire d'authentifier ce terminal radiotéléphonique pour éviter des fraudes. Une procédure d'authentification est réalisée selon une procédure GSM normalisée, à partir d'une clé secrète qui est contenue dans la carte SIM. La procédure d'authentification est toujours réalisée par le terminal RT2, quel que soit le terminal radiotéléphonique RT1, RT2, ou RT3 qui établit la communication, et quel que soit le terminal d'usager UT1,..., UT100 qui est le bénéficiaire de la communication. Autrement dit, la clé secrète contenue dans la carte SIM est commune pour tous ces terminaux UT1, ..., UT100.

Dans d'autres exemples de réalisation, chaque terminal radio fixe peut posséder une carte d'identité SIM propre, et exécuter lui-même la procédure d'authentification, avec une clé secrète qui lui est propre.

La procédure de localisation est une procédure GSM normalisée qui est répétée périodiquement comme si les terminaux UT1, ..., UT100 étaient mobiles. Le dispositif de coordination CD choisit périodiquement un terminal parmi les terminaux radiotéléphoniques disponibles et lui commande d'exécuter la procédure de localisation pour les cent identités internationales ou temporaires d'abonné mobile, IMSI ou TMSI, qui sont contenues dans la table.

La fonction de sélection directe est réalisée selon le procédé suivant qui ne nécessite pas de modification du réseau radiotéléphonique PLMN, parce qu'il est prévu dans la norme GSM : Le centre MSC envoie un message appelé SETUP et qui contient le numéro d'annuaire du terminal d'usager appelé, conformément aux normes GSM. Le terminal RT1, RT2, ou RT3, qui est en charge d'une communication, retransmet le numéro d'annuaire au commutateur SW pour que ce dernier puisse sélectionner le terminal d'usager qui est appelé. Le logiciel de chaque terminal RT1, RT2, ou RT3 est modifié pour extraire, du message SETUP reçu pour l'établissement de chaque appel, le numéro d'annuaire du terminal d'usager UT1, ..., UT100 qui est appelé ; et pour envoyer ce numéro au commutateur SW, sous la forme de messages de signalisation classiques, afin de permettre au commutateur de sélectionner le terminal d'usager, qui est appelé.

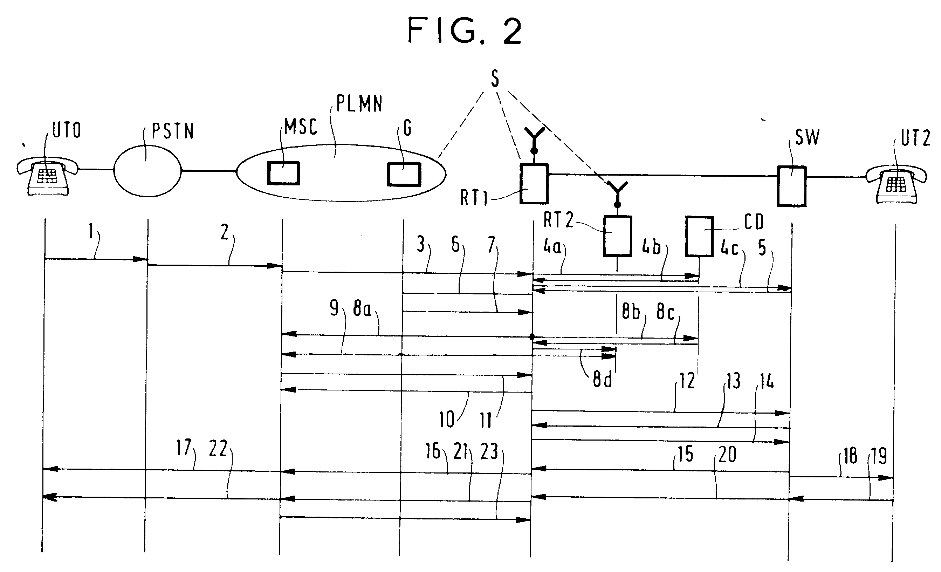

La figure 2 représente un diagramme temporel illustrant le fonctionnement du dispositif selon l'invention, lors de l'établissement d'une communication entre un terminal d'usager UT0 relié au réseau PSTN et un terminal d'usager UT2 de la communauté isolée IC :
1) Un usager décroche le combiné du terminal UT0 et compose le numéro d'annuaire du terminal UT2.
2) Un centre de commutation du réseau PSTN envoie à un centre MSC de commutation du service radio mobile un message demandant l'établissement d'un communication avec le terminal UT2 désigné par le numéro d'annuaire.
3) Le centre MSC consulte les bases de données du réseau GSM pour connaître l'identité d'abonné mobile IMSI correspondant au numéro d'annuaire, et la zone géographique où se trouve le terminal appelé, de la même manière que pour un terminal mobile classique. Il sait alors que le terminal appelé est dans une des zones géographiques desservies par le satellite S. Via la passerelle G et le satellite S, il émet dans cette zone un message de recherche du terminal désigné par cette identité IMSI ou TMSI.
4a) Le terminal radiotéléphonique fixe RT1, par exemple, est chargé d'écouter les messages de recherche à l'instant considéré. Il reçoit ce message. Il envoie l'identité reçue au dispositif de coordination CD. Si le message contient une identité IMSI, le dispositif CD compare l'identité IMSI reçue avec l'identité IMSI mémorisée dans sa table, à deux chiffres près. Si le message contient une identité TMSI, le dispositif CD compare l'identité TMSI reçue avec celles mémorisées. Il est ainsi capable de reconnaître l'une des cent identités IMSI ou des cent identités TMSI correspondant aux terminaux UT1, ..., UT100. En l'occurrence la comparaison a un résultat positif, il reconnaît l'identité IMSI ou TMSI correspondant au terminal d'usager UT2.
4b) Le dispositif CD ayant reconnu une identité. il fait passer le terminal radio fixe RT1 de l'état d'écoute de message de recherche à l'état de communication, et il choisit un autre terminal disponible pour le placer dans l'état d'écoute de message de recherche.
4c) Le terminal RT1 envoie alors un message au commutateur SW pour lui indiquer l'arrivée d'un appel.
5) Le commutateur SW lui répond par un message demandant la transmission du premier chiffre du numéro d'annuaire du terminal demandé.
6) Le terminal RT1 demande à la passerelle G, via le satellite S, l'attribution d'un canal radio pour une communication téléphonique.
7) La passerelle G attribue un canal radio au terminal RT1.
8a) Le terminal RT1 envoie alors au centre MSC de commutation du service radio mobile une réponse positive au message de recherche.
8b) Par ailleurs, il demande au dispositif de coordination CD quel est le terminal chargé d'exécuter la procédure d'authentification.
8c) Le dispositif CD lui indique que c'est le terminal RT2.
8d) Le terminal RT1 envoie donc un message au terminal RT2 lui demandant d'exécuter la procédure d'authentification. Le terminal RT2 l'exécute.
9) Le terminal RT2 et le centre de commutation MSC échangent alors des messages pour authentifier le terminal RT2, selon la procédure normalisée GSM. Pendant cette procédure d'authentification, le terminal RT2 utilise une même clé secrète, contenue dans la carte SIM, quelque soit le terminal UT1,..., UT100, qui est appelé. Puis ils initialisent le chiffrement/déchiffrement des signaux de parole, selon la procédure normalisée GSM.
10) Puis le centre MSC demande au terminal RT1 d'établir la communication. Le centre MSC envoie un message appelé SETUP et qui contient le numéro d'annuaire du terminal d'usager appelé, conformément aux normes GSM. Le terminal RT1 va l'envoyer au commutateur SW pour sélectionner le terminal d'usager qui est appelé.
11) Le terminal RT1 confirme au centre MSC que la communication est établie.
12) Le terminal RT1 envoie au commutateur SW le premier chiffre du numéro d'annuaire.
13) Le commutateur SW accuse réception de ce premier chiffre, et demande la transmission du deuxième chiffre.
14) Le terminal RT1 envoie au commutateur SW le deuxième chiffre du numéro d'annuaire.
15) Ce processus est répété jusqu'à ce que tous les chiffres aient été transmis au commutateur SW. Ce dernier indique alors au terminal RT1 qu'il a reçu le numéro complet. Il sélectionne alors le terminal d'usager UT2 qui est appelé.
16) Le terminal RT1 envoie alors un message d'alerte au centre MSC.
17) Le centre MSC retransmet le message d'alerte au réseau PSTN.
18) Simultanément le commutateur SW envoie un signal de sonnerie au terminal UT2 appelé.
19) Quand quelqu'un décroche le combiné du terminal UT2, celui-ci signale le décrochage au commutateur SW.
20) Le commutateur SW signale au terminal RT1 qu'on répond à l'appel.
21) Le terminal RT1 demande au centre de commutation MSC de connecter le terminal demandeur UT0.
22) Le centre MSC retransmet cette demande au réseau PSTN.
23) Puis il confirme l'exécution de cette demande auprès du terminal RT1.

La portée de l'invention n'est pas limitée aux réseaux radiotéléphoniques utilisant des satellites, et qui sont dérivés des réseaux du type GSM. L'invention peut être appliquée aux réseaux de type GSM classique.

## Revendications

1. Dispositif pour relier un commutateur téléphonique à un réseau téléphonique fixe (PSTN) via une pluralité de terminaux radiotéléphoniques fixes d'un réseau radiotéléphonique (PLMN) ; une pluralité de terminaux d'usager (UT1..., UT100) étant reliés à ce commutateur téléphonique ; ce dispositif comportant une pluralité de terminaux radiotéléphoniques fixes (RT1,...,RT3) comportant chacun des moyens (P1, P2, P3) pour communiquer avec ce réseau radiotéléphonique, ces moyens comportant un processeur (P1, P2, P3) ; chacun des terminaux radiotéléphoniques fixes (RT1,...,RT3) ne pouvant être que dans un seul des états suivants :
- à l'écoute des messages de recherche d'un terminal ;
- en communication téléphonique avec le réseau radiotéléphonique ;
- ou disponible, un terminal étant considéré comme disponible même s'il est en procédure de localisation, ou d'authentification ;
**caractérisé** en ce qu'il comporte en outre des moyens de coordination (CD) reliés à chacun des processeurs (P1, P2, P3) des terminaux radiotéléphoniques fixes (RT1,...,RT3), pour gérer dynamiquement l'affectation de ces terminaux aux communications téléphoniques établies entre le réseau téléphonique fixe (PSTN) et les terminaux d'usager (UT1,..., UT100) ;
en ce que chaque terminal radiotéléphonique fixe (RT1,...,RT3) comporte des moyens (P1, P2, P3) pour indiquer son état aux moyens de coordination (CD) ;
et en ce que les moyens de coordination (CD) comportent des moyens (P0) pour activer à chaque instant un seul des terminaux radiotéléphoniques fixes (RT1,...,RT3), choisi parmi ceux qui sont disponibles à l'instant considéré, pour le mettre à l'écoute de messages de recherche d'un terminal.

2. Dispositif selon la revendication 1, caractérisé en ce que les terminaux radiotéléphoniques fixes comportent des moyens (P1,...,P3) pour transmettre aux moyens de coordination (CD) une identité reçue dans un message de recherche diffusé par le réseau radiotéléphonique ;
et ce que les moyens de coordination (CD) contiennent et mettent à jour une table d'identités internationales d'abonné mobile et d'identités temporaires d'abonné mobile, correspondant aux terminaux d'usager (UT1,..., UT100) reliés au commutateur pour :
- déterminer si une identité reçue correspond à l'un de ces terminaux d'usager, et répondre au terminal radiotéléphonique (RT1,...,RT3) qui l'a reçu ;
- et, le cas échéant, commander à ce terminal d'établir une communication avec le réseau radiotéléphonique.

3. Dispositif selon la revendication 1, caractérisé en ce qu'un seul terminal radiotéléphonique (RT2) comporte des moyens (P2, SIM) pour authentifier un terminal radiotéléphonique (RT1, RT2, RT3) en utilisant une même clé pour tous les appels reçus ou émis via ce terminal radiotéléphonique fixe, et quel que soit ce terminal ;
et en ce que les autres terminaux radiotéléphoniques fixes (RT1, RT3) comportent chacun des moyens (P1, P3) pour demander aux moyens de coordination (CD) de lui indiquer quel terminal radiotéléphonique fixe (RT1, RT2, RT3) comporte des moyens (P2, SIM) pour authentifier ; et pour demander ensuite au terminal (RT2) ainsi désigné d'effectuer la procédure d'authentification.

4. Dispositif selon la revendication 1, caractérisé en ce que chaque terminal radiotéléphonique fixe comporte en outre des moyens (P) pour effectuer une procédure de localisation, pour toutes les identités internationales ou temporaires d'abonné mobile (IMSI ou TMSI) qui sont contenues dans la table ;
et en ce que les moyens de coordination (CD) comportent des moyens pour choisir l'un des terminaux radiotéléphoniques (RT1,...,RT3) disponibles, et l'activer pour effectuer la procédure de localisation pour toutes les identités internationales d'abonné mobile qui sont contenues dans la table.
